# EUROPÄISCHE PATENTSCHRIFT

(11) **EP 1 350 230 B1**
(45) Veröffentlichungstag und Bekanntmachung des Hinweises auf die Patenterteilung: **11.05.2016**
(21) Anmeldenummer: 01923676.9
(22) Anmeldetag: 16.03.2001
(51) Int. Cl.: G06Q 20/34, G07F 7/10

(54) **KARTENTERMINAL UND VERFAHREN ZUM BETREIBEN EINES KARTENTERMINALS**
CARD TERMINAL AND METHOD FOR OPERATING A CARD TERMINAL
TERMINAL POUR CARTE ET PROCÉDÉ POUR ACTIONNER UN TERMINAL POUR CARTE

(30) Priorität: 30.03.2000 DE 10015775
(43) Veröffentlichungstag der Anmeldung: 08.10.2003
(73) Patentinhaber: Deutsche Telekom AG, 53113 Bonn (DE)
(72) Erfinder: KEHR, Roger, 64287 Darmstadt (DE); VOGT, Harald, 89331 Burgau (DE); POSEGGA, Joachim, 76646 Bruchsal (DE)
(74) Vertreter: Clarenbach, Carl-Philipp
(86) Internationale Anmeldenummer: PCT/EP2001/003055
(87) Internationale Veröffentlichungsnummer: WO 2001/075815

(56) Entgegenhaltungen:
- EP-A- 0 446 081
- EP-A- 0 626 664
- EP-A- 0 639 020
- EP-A- 0 989 529
- WO-A-97/16904
- WO-A-98/09256
- FR-A- 2 708 764
- FR-A- 2 777 673
- GB-A- 2 326 010

## Beschreibung

Die Erfindung geht aus von einem Verfahren zum Betreiben eines Kartenterminals gemäß Oberbegriff des Anspruchs 1 sowie von einem Kartenterminal mit den im Oberbegriff des Anspruchs 10 genannten Merkmalen. Die Erfindung betrifft ferner die Verwendung einer zumindest eine Kartenfunktion aufweisenden Karte mit zumindest einem nicht-flüchtigen Datenspeicher.

Ein Kartenterminal sowie ein Verfahren zum Betreiben desselben sind bekannt. Derartige Kartenterminals weisen einen Kartenleser und eine datenverarbeitende Einrichtung auf, wobei Kartenleser und diese Einrichtung miteinander verbunden sind. Diese Kartenterminals sind beispielsweise als Bankautomaten realisiert, bei denen ein Kunde mit einer entsprechenden Karte Bankgeschäfte tätigen kann. Derartige Karten, die auch als Smartcards bezeichnet werden, weisen zumindest eine Kartenfunktion auf. Im vorliegenden Beispiel der Bankautomaten besitzen die Karten beispielsweise eine Funktion, um Bargeld an diesen Automaten zu erhalten. Die Karte weist einen nicht-flüchtigen Datenspeicher auf, in dem kundenspezifische Daten abgespeichert sind. Hierzu gehören beispielsweise die Kontonummer oder dergleichen. In den meisten Fällen sind die auf der Karte gespeicherten Daten verschlüsselt abgelegt, so dass ein unerwünschter Zugriff durch Dritte zumindest erschwert ist.

Um die Kartenfunktion nutzen zu können, weist das bekannte Kartenterminal ein entsprechend in diesem gespeichertes Ausführungs-beziehungsweise Anwendungsprogramm auf. Dieses Programm unterstützt die Kartenfunktion beziehungsweise ermöglicht deren Ausführung am Kartenterminal. Somit ist das bekannte Kartenterminal für eine bestimmte Kartenfunktion festgelegt. Das bekannte Kartenterminal ist daher wenig flexibel.

Aus der Offenlegungsschrift GB 2 326 010 A geht ein Verfahren zum Betreiben eines Kartenterminals hervor, welches einen lokalen Speicher aufweist, in dem unterschiedliche Applikationen gespeichert sind, von denen in Abhängigkeit von der Kartenfunktion einer eingeführten Karte eine zum Konfigurieren des Kartenterminals ausgewählt wird.

Aus der Veröffentlichungsschrift WO 98/09256 A geht außerdem ein Verfahren zur Vorbereitung der Durchführung einer Chip-Karten-Applikation hervor, bei dem unterschiedliche Chip-Karten-Applikationen mithilfe eines Chip-Karten-Terminals durchgeführt werden, wobei die zur Durchführung der Applikation benötigte Software von einem Chip-Karten-Software-Server über eine Datenübrtragungseinrichtung an das Chip-Karten-Terminal übertragen wird.

Ferner ist aus der EP 0 446 081 A1 bereits ein Verfahren bekannt, bei dem auf einer Karte gespeicherte Applikationen zum Konfigurieren eines Kartenterminals, das eine Kommunikationsverbindung zu mehreren Servern aufbauen kann, verwendet werden.

Es ist daher Aufgabe der Erfindung, ein Verfahren zum Betreiben eines Kartenterminals sowie ein Kartenterminal der eingangs genannten Art anzugeben, das sich durch hohe Flexibilität auszeichnet. Gelöst wird diese Aufgabe mit einem Verfahren zum Betreiben eines Kartenterminals, das die im Anspruch 1 genannten Merkmale aufweist. Dieses Kartenterminal ist für eine zumindest eine Kartenfunktion aufweisende Karte vorgesehen, die einen nichtflüchtigen Datenspeicher aufweist. Das erfindungsgemäße Verfahren zeichnet sich dadurch aus, dass das Kartenterminal zuerst die Kartenfunktion ermittelt und dass dann in Abhängigkeit der Kartenfunktion das Kartenterminal softwaremäßig konfiguriert wird. Nach dem Einschieben der Karte in das Kartenterminal wird-wie vorstehend erwähnt-zunächst die Kartenfunktion ermittelt, um anschließend in Abhängigkeit dieser Kartenfunktion ein entsprechendes Konfigurationsmittel in das Kartenterminal einzulesen. Derartige Konfigurationsmittel können beispielsweise sogenannte Karten-Treiber sein, die es ermöglichen, dass das Kartenterminal mit der eingesteckten Karte kommunizieren kann. Da nicht in allen Fällen die in dem nicht-flüchtigen Datenspeicher abgelegten Daten auf unterschiedlichen Karten in demselben Format abgespeichert sind, werden in den meisten Fällen diese Karten-Treiber als Konfigurationsmittel benötigt. Konfigurationsmittel können jedoch auch Ausführungs-beziehungsweise Anwendungsprogramme (Applikationen) sein, die die Kartenfunktion terminalseitig unterstützen beziehungsweise zur Ausführung bringen. Beim erfindungsgemäßen Verfahren besteht die softwaremäßige Konfiguration also darin, in das Kartenterminal zumindest ein Konfigurationsmittel einzulesen. Das erfindungsgemäße Verfahren zeichnet sich also dadurch aus, dass das Kartenterminal eine hohe Flexibilität besitzt, da erst nachdem die Kartenfunktion ermittelt wurde das/die entsprechende (n) Konfigurationsmittel in das Kartenterminal geladen wird/werden. Es können somit für unterschiedliche Karten beziehungsweise unterschiedliche Kartenfunktionen hardwaremäßig ein und dieselben Kartenterminals bereitgestellt werden. Erst durch die erfindungsgemäße softwaremäßige Konfiguration wird dann das Kartenterminal an die entsprechende Kartenfunktion angepasst, so dass die gewünschte Benutzerfunktion ausführbar sind.

Erfindungsgemäß ist vorgesehen, dass für das Konfigurieren über eine Netzwerkschnittstelle des Kartenterminals eine Kommunikationsverbindung zu einem der Kartenfunktion zuordenbaren Netzwerkelement aufgebaut wird. In diesem Netzwerkelement kann dann das Konfigurationsmittel abgespeichert sein, das dann über das Netzwerk in das Kartenterminal geladen wird, um dort abgearbeitet werden zu können. Mithin ist es möglich, in einem Netzwerk, das mehrere Kartenterminals aufweist, an beliebigen Standorten der Kartenterminals immer die gewünschte Kartenfunktion bereitstellen beziehungsweise ausführen zu können.

In einer Weiterbildung der Erfindung ist also vorgesehen, dass das Netzwerkelement in Abhängigkeit der ermittelten Kartenfunktion zumindest ein Konfigurationsmittel an das Kartenterminal übermittelt. Dieses Konfigurationsmittel kann ein Karten-Treiber sein, der eine Kommunikation zwischen Kartenterminal beziehungsweise Kartenleser und der Karte ermöglicht. Mithin ist es in besonders bevorzugter Ausführungsform möglich, das Kartenterminal mit einer "Minimalsoftware" auszustatten, die es lediglich erlaubt, bei eingeschobener Karte die Kartenfunktion zu ermitteln. Um weitergehende Kommunikation mit der Karte zu ermöglichen, wird dann der Karten-Treiber geladen.

Erfindungsgernäß wird die Kartenfunktion mittels zumindest einer auf der Karte gespeicherten Identifikation ermittelt. Jede Karte weist zumindest eine nur dieser Karte zugeordnete Identifikation auf, wobei jede Identifikation als Buchstaben-und/oder Zahlenkombination in dem nicht-flüchtigen Datenspeicher abgespeichert sein kann. Die zumindest eine Identifikation kann auch verschlüsselt abgelegt sein. Um die Kartenfunktion feststellen zu können, wird über das Karten-terminal diese zumindest eine Identifikation ausgelesen und in deren Abhängigkeit zumindest eine Kartenfunktion ermittelt. Es kann also vorgesehen sein, dass die zumindest eine auf der Karte gespeicherte Identifikation so ausgelegt ist, dass eine eindeutige Ermittlung der Kartenfunktion ermöglicht wird.

Um die entsprechende softwaremäßige Konfiguration des Karten-terminals ausführen zu können, ist ierfindungsgemäß vorgesehen, dass das Kartenterminal aus der Identifikation die Netzwerkadresse des Netzwerkelements ermittelt. Die Identifikation kann also entsprechend codiert sein, so dass eine eindeutige Zuordnung zu einer Netzwerkadresse gegeben ist, um das entsprechende Netzwerkelement leicht ermitteln und auch ansprechen zu können.

Gemäß einer besonders bevorzugter Ausführungsform ist vorgesehen, dass das Kartenterminal aus der Identifikation Anfrage-Parameter ermittelt, die an das Netzwerkelement weitergeleitet werden, um von dem Netzwerkelement zumindest das eine der Kartenfunktion zugeordnete Konfigurationsmittel zu erhalten, das dann in dem Kartenterminal abgearbeitet wird. Sind beispielsweise mehrere Kartenfunktionen auf der Karte abgelegt oder benötigt eine einzige Kartenfunktion mehrere Konfigurationsmittel, so können diese über die entsprechenden Anfrage Parameter von dem Netzwerkelement erhalten werden.

Nach einer Weiterbildung der Erfindung ist vorgesehen, dass das Kartenterminal in Abhängigkeit der Kartenfunktion und/oder des bereits erhaltenen Konfigurationsmittels zu mehreren Netzwerkelementen, vorzugsweise nacheinander, eine Kommunikationsverbindung aufbaut. So ist es möglich, dass nach Auslesen der Identifikation ein Netzwerkelement ermittelt wird, über das Konfigurationsmittel erhalten werden können, und dass dann zu einem anderen Netzwerkelement eine Kommunikationsverbindung aufgebaut werden kann, um weitere Konfigurationsmittel zu erhalten.

Bei einem Ausführungsbeispiel ist vorgesehen, dass zumindest eines der Konfigurationsmittel ein Konfigurationsprogramm ist, das auch als Karten-Treiber bezeichnet wird, mit dem das Kartenterminal mit der Karte kommunizieren kann.

Zumindest ein anderes der Konfigurationsmittel kann ein Ausführungs-beziehungsweise Anwendungsprogramm sein, mit dem die Kartenfunktion ausgeführt beziehungsweise unterstützt werden kann. Diese Ausführungsprogramme werden auch als Applikationen bezeichnet. Mithin kann an einem beliebigen Kartenterminal des Netzwerks die gewünschte Kartenfunktion bereitgestellt werden.

Bei einem anderen Ausführungsbeispiel kann zumindest eines der Konfigurationsmittel eine Netzwerkadresse des einen Netzwerkelements oder eines weiteren Netzwerkelements sein. Nach der Ermittlung der Kartenfunktion wird beispielsweise die Netzwerkadresse eines Netzwerkelements ermittelt, auf dem mehrere, der entsprechenden Kartenfunktion zugeordnete Netzwerkadressen abgelegt sind. Entsprechend wird die der Kartenfunktion zugeordnete Netzwerkadresse ausgewählt und an das Kartenterminal übermittelt, das dann mit dieser Netzwerkadresse das weitere Netzwerkelement ansprechen kann, um ein dieser Kartenfunktion zugeordnetes Ausführungsprogramm zu erhalten.

Bei einem anderen Ausführungsbeispiel kann vorgesehen sein, dass zumindest eines der vorstehend erwähnten Konfigurationsmittel auf der Karte gespeichert ist. Insbesondere ist dann vorteilhaft, dass - sofern ein Karten-Treiber auf der Karte gespeichert ist-sofort eine Kommunikation zwischen Kartenterminal und Karte möglich ist, um beispielsweise über ein Netzwerkelement dann das Ausführungsprogramm zu erhalten. Es kann auf der Karte auch zumindest ein Ausführungsprogramm gespeichert sein.

Diese Aufgabe wird auch mit einem Kartenterminal gelöst, das die in Anspruch 10 genannten Merkmale besitzt. Dieses Kartenterminal weist einen Kartenleser und eine datenverarbeitende Einrichtung auf, in der zumindest ein Konfigurationsmittel abgearbeitet werden kann. Das Kartenterminal ist für eine zumindest eine Kartenfunktion aufweisende Karte mit einem nicht flüchtigen Datenspeicher vorgesehen. Das erfindungsgemäße Kartenterminal zeichnet sich dadurch aus, dass es eine Einrichtung zur Ermittlung der Kartenfunktion aufweist und dass die datenverarbeitende Einrichtung in Abhängigkeit der Kartenfunktion softwaremäßig konfigurierbar ausgebildet ist. Diese datenverarbeitende Einrichtung kann also einen Arbeitsspeicher umfassen, in den zumindest ein Konfigurationsmittel ladbar ist, das dann in einem Rechenwerk abarbeitbar ist, um die Kartenfunktion ausführen beziehungsweise unterstützen zu können. Das erfindungsgemäße Kartenterminal zeichnet sich also auch durch eine hohe Flexibilität aus. Es ist insbesondere für die Durchführung des vorstehend erwähnten Verfahrens vorgesehen.

Um das Kartenterminal softwaremäßig konfigurieren zu können, weist es erfindungsgemäß eine Netzwerkschnittstelle auf, die einen Aufbau einer Kommunikationsverbindung zu einem Netzwerkelement ermöglicht, in dem zumindest eines der Konfigurationsmittel gespeichert ist.

Diese Aufgabe wird auch unter Verwendung einer zumindest eine Kartenfunktion aufweisenden Karte mit zumindest einem Datenspeicher gelöst, wobei bei der Verwendung der Karte die softwaremässige Konfiguration eines Kartenterminals durchgeführt wird. Die Karte ermöglicht zumindest den Zugriff des Kartenterminals, um die Kartenfunktion ermitteln zu können.

Auf der Karte beziehungsweise in dem Datenspeicher kann zumindest ein Konfigurationsmittel abgelegt sein. Es genügt jedoch auch, wenn die auf der Karte gespeicherte Identifikation von einem Kartenterminal ausgelesen werden kann, woraufhin in Abhängigkeit dieser Identifikation die softwaremäßige Konfiguration des Kartenterminals ausgeführt wird.

Selbstverständlich ist es möglich, auf der Karte, vorzugsweise verschlüsselte, Sicherheitscodes zu speichern, die vom Kartenterminal vor verschiedenen Verfahrensschritten abgefragt werden, um eine unberechtigte Nutzung der Karte zu vermeiden.

Weitere vorteilhafte Ausgestaltungen ergeben sich aus den Unteransprüchen.

Die Erfindung wird nachfolgend anhand von Ausführungsbeispielen mit Bezug auf die Zeichnung näher erläutert. Es zeigen:
- Figur 1: ein Kartenterminal,
- Figur 2: ein Verfahrensablauf zur softwaremäßigen Konfiguration des Kartenterminals nach Figur 1, und
- Figur 3: ein Netzwerk mit zumindest einem Kartenterminal nach Figur 1.

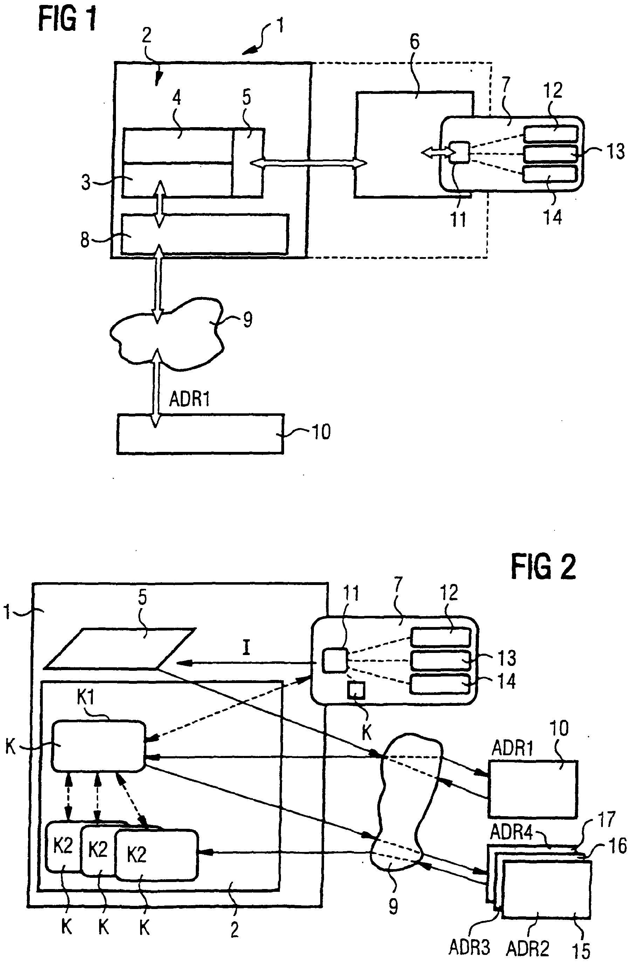

Figur 1 zeigt ein Kartenterminal 1, das eine datenverarbeitende Einrichtung 2 besitzt, die einen Arbeitsspeicher 3, ein Rechenwerk 4 und eine Einrichtung 5 zur Ermittlung einer Kartenfunktion umfasst. Die Einrichtung 2 ist mit einem Kartenleser 6 verbunden, der eine hardwaremäßige Schnittstelle zwischen der Einrichtung 2 und einer in den Kartenleser 6 einbringbaren Karte 7 bildet. Der Kartenleser 6 kann als externes Gerät realisiert oder aber in das Kartenterminal 1 integriert sein, wie dies in Figur 1 gestrichelt angedeutet ist. Das Kartenterminal 1 weist ferner eine Netzwerkschnittstelle 8 auf, die einerseits mit der Einrichtung 2 und andererseits mit einem Netzwerk 9 verbunden ist, welches als lokales Netzwerk (LAN) oder auch als Fernnetz, beispielsweise das Internet, ausgebildet sein kann. An das Netzwerk 9 ist neben dem Kartenterminal 1 ein zumindest ein weiteres Netzwerkelement 10 angeschlossen. Eine Datenübertragung zwischen dem Netz 9 und dem Kartenterminal 1 und zwischen dem Netzwerk 9 und dem Netzwerkelement 10 ist jeweils in bidirektionale Richtung möglich.

Die Karte 7 weist einen nicht-flüchtigen Datenspeicher 11 auf, der als Magnetstreifen oder -wie in Figur 1 dargestellt- als Chip ausgebildet sein kann. Die Karte 7 weist zumindest eine Kartenfunktion 12, 13 oder 14 auf, wobei in dem Datenspeicher 11 die der Kartenfunktion 12, 13 oder 14 zugeordnete Informationseinheit als Programmcode gespeichert ist. Im Ausführungsbeispiel weist die Karte 7 drei Kartenfunktionen auf; selbstverständlich können mehr oder weniger Kartenfunktionen 12, 13, 14 auf der Karte 7 enthalten sein. Ist der Datenspeicher 11 als Chip realisiert, kann dieser außerdem einen datenverarbeitenden Prozessor umfassen, so dass eine "intelligente" Karte 7 vorliegt.

Anhand von Figur 2 wird im folgenden ein Verfahren zum Betreiben des Kartenterminals 1 beschrieben: Nach dem Einschieben der Karte 7 in den Kartenleser 6 ermittelt zunächst die Einrichtung 5 die zumindest eine Kartenfunktion 12, 13 oder 14. Vorzugsweise erfolgt dies dadurch, dass eine in dem Datenspeicher 11 abgelegte Identifikation I, die auch als Identifikationsstring bezeichnet wird, aus der Karte 7 ausgelesen wird. Dies erfolgt insbesondere dadurch, dass die Karte beziehungsweise der Datenspeicher 11 auf einen definierten Zustand zurückgesetzt wird, woraufhin von dem Datenspeicher 11 die vorstehend erwähnte Identifikation I an die Einrichtung 5 geliefert wird. Diese auch als ATR (Answer To Reset) -String bezeichnete Identifikation I wird also im Rahmen des standardisierten Rücksetzvorgangs der Karte 7 als Ergebnis geliefert. Aus dieser Identifikation I bildet das Kartenterminal 1 zumindest folgende Informationseinheiten ab: Die Netzwerkadresse ADR 1 des Netzwerkelements 10 sowie Parameter für eine Anfrage an dieses Netzwerkelement 10. Das Kartenterminal 1 verwendet diese Netzwerkadresse ADR1 zum Aufbau einer Kommunikationsverbindung mit diesem Netzwerkelement 10 und gibt eine Anfrage an dieses Element 10 auf. Diese Anfrage umfasst die Parameter und Informationen über die Einrichtung 2, um beispielsweise von dem Netzwerk 10 Informationen in einem entsprechenden Format zu erhalten. Aufgrund dieser Anfrage beziehungsweise dieser übermittelten Parameter wird aus dem Netzwerkelement 10 eine diesen Parametern zugeordnete Information ausgewählt und an das Kartenterminal zurückgesendet. Diese Information enthält zumindest ein Konfigurationsmittel K, das in der Einrichtung 2 abgearbeitet wird. Ein Konfigurationsmittel K1 ist beispielsweise ein Konfigurationsprogramm, das auch als Karten-Treiber bezeichnet wird. In der Einrichtung 2 wird dieses Konfigurationsmittel K1 zur Ausführung gebracht. Es ermöglicht dann die Kommunikation mit der Karte 7. Die Einrichtung 2 ermittelt durch Kommunikation mit der Karte 7 zumindest eine weitere Netzwerkadresse ADR2, ADR3 o-der ADR4 und entsprechende Anfrageparameter, um von zumindest einem weiteren Netzwerkelement 15, 16, oder 17 zumindest ein weiteres Konfigurationsmittel K zu erhalten, das beispielsweise ein Ausführungsprogramm K2 sein kann. Das Ausführungsprogramm K2 (Applikation) ermöglicht die terminalseitige Ausführung zumindest einer der Kartenfunktionen 12, 13, oder 14.

Die von den Netzwerkelementen 10, 15, 16, 17 erhaltenen Konfigurationsmittel K werden in der auch als Ausführungsplattform bezeichneten Einrichtung 2 abgearbeitet, um die gewünschte Kartenfunktion unterstützen zu können. Jedes Konfigurationsmittel K erhält Zugang zur Kommunikation mit der entsprechenden auch als Applikation bezeichneten Kartenfunktion 12, 13 oder 14. Jedes Konfigurationsmittel kann außerdem Zugang zur Netzwerkschnittstelle 8 erhalten, um selbständig weitere Konfigurationsmittel K über das Netz 9 anfordern zu können. Selbstverständlich ist es auch möglich, dass sämtliche Konfigurationsmittel K1 und K2 von einem einzigen Netzwerkelement 10, 17, 16 oder 15 angefordert werden können. Denkbar wäre es allerdings auch, dass jedes Konfigurationsmittel K -wie in Figur 2 dargestellt- von einem der Netzwerkelemente 10, 15, 16 oder 17 angeboten wird.

Das Kartenterminal 1 verfügt über zumindest einen ATR- (Answer To Reset) Abbildungsmechanismus, der in der Einrichtung 5 implementiert ist. Außerdem verfügt das Kartenterminal 1 über die Ausführungsplattform 2, um quasi mobilen Code, also die Konfigurationsmittel K, ausführen zu können. Das beschriebene Kartenterminal 1 ist also vielseitig softwaremäßig konfigurierbar, insbesondere als Folge des Einführens der Karte 7 in den Kartenleser 6, wodurch über die Einrichtung 5 die entsprechende Kartenfunktion 12, 13 oder 14 ermittelt werden kann. Über das Netzwerk 9 können anschließend die für die Kommunikation mit der Karte 7 und der in der Ausführungsplattform 2 abzuarbeitenden Konfigurationsmittel K herunter geladen werden, so dass das vor dem Einschieben der Karte nahezu funktionslose Kartenterminal 1 erst durch die softwaremäßige Konfiguration aktiviert wird. Zu Beginn eines Aktivierungsvorganges weist das Kartenterminal 1 also lediglich eine "Minimalsoftware" auf, die es ermöglicht, die Kartenfunktion 12, 13 oder 14 zu ermitteln. Erst nachdem diese Kartenfunktion ermittelt wurde und entsprechende Konfigurationsmittel über das Netzwerk 9 erhalten wurden, ist das Kartenterminal 1 "intelligent" und kann die zumindest eine Kartenfunktion 12, 13, 14 terminalseitig unterstützen.

Den mit der Einrichtung 5 auszuführenden ATR-Abbildungsmechanismus könnte man sich vorstellen als die Abbildung der Identifikation I auf zumindest eine vorgebbare Netzwerkadresse ADR1, ADR2, ADR3 oder ADR4, hinter der sich ein im Netzwerk 9 zugänglicher Server mit dieser festen Adresse verbirgt. Die Anfrage an dieses Netzwerkelement 10, 15, 16, 17 könnte mit einer durch den ATR-String und den Informationen der Ausführungsplattform 2 parametrisierten HTTP-Anfrage realisiert sein, auf die der Server das entsprechende Konfigurationsmittel K dynamisch, also selbständig, zurückliefert.

Sind mehrere ATR-Abbildungsmechanismen vorgesehen, kann jedem Abbildungsmechanismus zumindest eine Identifikation I (ATR-String) zugeordnet sein, die jeweils zumindest einer Netzwerkadresse ADR zuordenbar ist.

Die Ausführungsplattform 2 könnte beispielsweise einer Java-Applet-Plattform eines gewöhnlichen Web-Browsers (Netscape, Internet Explorer etc.) ähneln, in die dynamisch Java-Applikationen heruntergeladen und aktiviert werden können. Wesentlicher Unterschied dabei ist die Möglichkeit der Konfigurationsmittel K im Kartenterminal 1 mit der entsprechenden Kartenfunktion 12, 13 oder 14 beziehungsweise der entsprechenden Karte kommunizieren zu können. Andere Ausführungsplattformen sind gleichermaßen denkbar. Informationen über die Ausführungsplattform könnten beispielsweise genutzt werden, um einen für die Ausführungsplattform geeigneten Treiber zu liefern.

Das Kartenterminal 1 kann daher potentiell alle Karten bedienen, für die geeignete Konfigurationsmittel K, vorzugsweise im Netzwerk 9, hinterlegt sind und die über den ATR-Abbildungsmechanismus, also über die Identifikation I, lokalisiert werden können. Möglich wäre es allerdings auch, auf der Karte 7 zumindest ein Konfigurationsmittel K zu speichern.

Dadurch, dass die Konfigurationsmittel K in der Ausführungsplattform 2 aktiviert werden, kann diese in der Lage sein, eigenständig weitere Aktivitäten durchzuführen. Hierzu zählen beispielsweise das Herausfinden der auf der Karte verfügbaren Applikationen 12, 13, 14 und die Veranlassung der Aktivierung der entsprechenden Konfigurationsmittel K.

Weiterhin können die Konfigurationsmittel K eine Dienste-Schnittstelle im Netzwerk 9 anbieten, mit deren Hilfe die Applikationen 12, 13, 14 auf der Karte 7 von einem anderen Netzwerkelement im Netzwerk 9 angesprochen werden. Denkbar wäre es jedoch auch, dass die den entsprechenden Applikationen 12, 13, 14 auf der Karte 7 zuordenbaren Konfigurationsmittel K ihrerseits proaktiv tätig werden, also selbständig weitere Aktivitäten ausführen, und not-wendige Aktionen zur Ermöglichung ihres Diensteangebots vornehmen. Weiterhin könnten diese Applikationen 12, 13, 14 dafür sorgen, innerhalb eines Netzwerkes den Dienst der Karte 7 anzubieten. Das heißt, dass auf einer Karte 7 gespeicherte Applikationen 12, 13, 14 über das Netzwerk 9 auch an anderen an dem Netzwerk 9 angeschlossene Kartenterminals 1 angeboten werden können. Es können also die auf der Karte 7 gespeicherten Applikationen 12, 13 oder 14 die softwaremäßigen Konfigurationsmittel für zumindest ein weiteres Kartenterminal bilden.

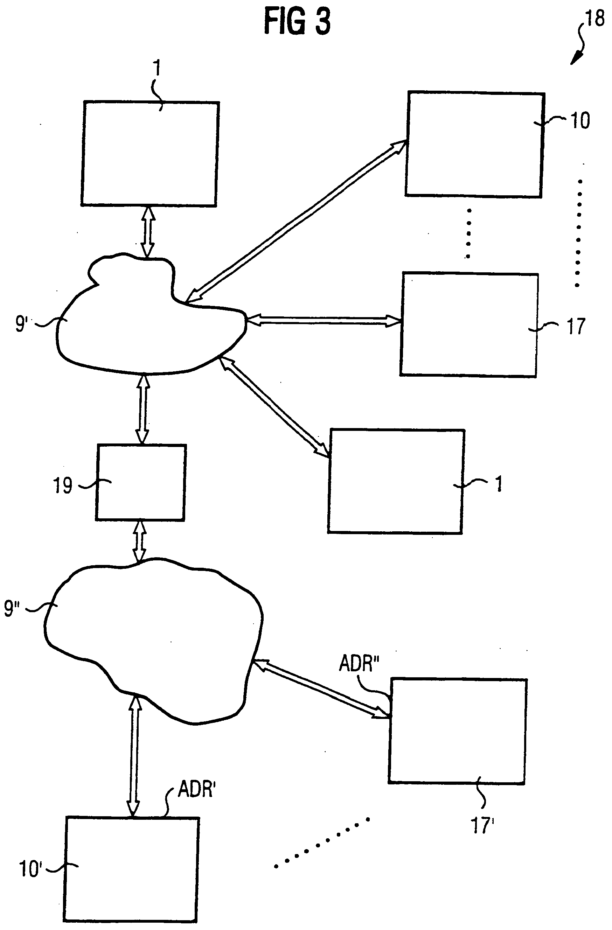

Figur 3 zeigt ein Netz 18, das zumindest zwei Kartenterminals 1 und zumindest ein Netzwerkelement 10 bis 17 umfasst. Diese Elemente sind über ein lokales Netzwerk 9' miteinander verbunden. Das Netzwerk 9' kann über einen Netzwerk-Server 19 mit einem Fernnetz 9'', vorzugsweise dem Internet, verbunden sein. Rein beispielhaft sind an das Internet 9'' Netzwerkelemente 10' bis 17' mit entsprechenden Adfressen ADR', Adv'' angebunden. Somit wird klar, dass für die softwaremäßige Konfiguration der Kartenterminals 1 Konfigurationsmittel K über die Netzwerkelemente 10 bis 17 des lokalen Netzwerks 9' und/oder auch über Netzwerkelemente 10' bis 17' des Internets 9'' angesprochen werden können, um die Konfigurationsmittel an zumindest einem der Karten-terminals 2 bereitstellen zu können. Denkbar wäre es allerdings auch, dass zumindest ein Kartenterminal 1 an das Internet 9'' angeschlossen ist.

## Patentansprüche

1. Verfahren zum Betreiben eines Kartenterminals (1) für eine zumindest eine Kartenfunktion (12,13,14) aufweisende Karte (7) mit einem nicht-flüchtigen Datenspeicher (11), wobei das Kartenterminal (1) zuerst die Kartenfunktion (12,13,14) mittels zumindest einer auf der Karte (7) gespeicherten Identifikation (I) ermittelt und dann in Abhängigkeit der Kartenfunktion (12,13,14) das Kartenterminal (1) softwaremäßig konfiguriert wird, **dadurch gekennzeichnet, dass** für das Konfigurieren über eine Netzwerkschnittstelle (8) des Kartenterminals (1) eine Kommunikationsverbindung zu zumindest einem der Kartenfunktion (12,13,14) zuordenbaren Netzwerkelement (10,15,16,17,10',15',16',17') eines mehrere Netzwerkelemente (10,15,16,17,10',15',16',17') aufweisenden Netzwerks (9,9') aufgebaut wird, wobei das Kartenterminal (1) aus der Identifikation (I) die Netzwerkadresse (ADR1,ADR2,ADR3,ADR4,ADR',ADR") des Netzwerkelements (10,15,16,17,10'15',16',17') ermittelt.

2. Verfahren nach Anspruch 1, **dadurch gekennzeichnet, dass** das Netzwerkelement (10,15,16,17,10', 15', 16', 17') in Abhängigkeit der ermittelten Kartenfunktion (12,13,14) Konfigurationsmittel (K) an das Kartenterminal (1) übermittelt.

3. Verfahren nach einem der vorhergehenden Ansprüche, **dadurch gekennzeichnet, dass** das Kartenterminal (1) aus der Identifikation (I) Anfrage-Parameter ermittelt, die an das Netzwerkelement (10,15,16,17,10', 15', 16', 17') weitergeleitet werden, um von dem Netzwerkelement zumindest das eine der Kartenfunktion (12,13,14) zuordenbare Konfigurationsmittel (K) zu erhalten, das dann in dem Kartenterminal (1) abgearbeitet wird.

4. Verfahren nach einem der vorhergehenden Ansprüche, **dadurch gekennzeichnet, dass** das Kartenterminal (1) in Abhängigkeit der Kartenfunktion (12,13, 14) und/oder des Konfigurationsmittels (K) zu mehreren Netzwerkelementen (10,15,16,17,10', 15', 16', 17') vorzugsweise nacheinander, eine Kommunikationsverbindung aufbaut.

5. Verfahren nach einem der vorhergehenden Ansprüche, **dadurch gekennzeichnet, dass** jedes der Netzwerkelemente (10,15,16,17,10', 15', 16', 17') Konfigurationsmittel (K) an das Kartenterminal (1) überträgt.

6. Verfahren nach einem der vorhergehenden Ansprüche, **dadurch gekennzeichnet, dass** eines der Konfigurationsmittel (K) ein Konfigurationsprogramm (KI) ist, mit dem das Kartenterminal (1) mit der Karte (7) kommunizieren kann.

7. Verfahren nach einem der vorhergehenden Ansprüche, **dadurch gekennzeichnet, dass** zumindest ein anderes der Konfigurationsmittel (K) ein Ausführungsprogramm (K2) ist, mit dem die Kartenfunktion (12,13,14) ausgeführt werden kann.

8. Verfahren nach einem der vorhergehenden Ansprüche, **dadurch gekennzeichnet, dass** zumindest ein weiteres der Konfigurationsmittel (K) eine Netzwerkadresse (ADR1, ADR2, ADR3, ADR4, ADR', ADR") eines Netzwerkelements (10,15,16,17,10', 15', 16', 17') ist.

9. Verfahren nach einem der vorhergehenden Ansprüche, **dadurch gekennzeichnet, dass** zumindest ein Ausführungsprogramm (K2) auf der Karte (7) gespeichert ist.

10. Kartenterminal (1) für eine zumindest eine Kartenfunktion (12,13,14) aufweisende Karte (7) mit einem nicht-flüchtigen Datenspeicher (11), mit einem Kartenleser (6) und mit einer datenverarbeitenden Einrichtung (2), wobei das Kartenterminal (1) eine Einrichtung (5) zur Ermittlung der Kartenfunktion (12,13,14) mittels zumindest einer auf der Karte gespeicherten Identifikation (I) aufweist und wobei die datenverarbeitende Einrichtung (2) in Abhängigkeit der Kartenfunktion (12,13,14) softwaremässig konfigurierbar ausgebildet ist, **gekennzeichnet durch** eine Netzwerkschnittstelle (8), über welche (für das Konfigurieren) das Kartenterminals (1) eine Kommunikationsverbindung zu zumindest einem der Kartenfunktion zuordenbaren Netzwerkelement (10,15,16,17,10', 15', 16', 17') eines mehrere Netzwerkelemente (10,15,16,17,10', 15', 16', 17') aufweisenden Netzwerks (9,9') aufbaut, wobei das Kartenterminal (1) aus der Identifikation (I) die Netzwerkadresse (ADR1,ADR2,ADR2,ADR4,ADR',ADR") des Netzwerkelementes (10,15,16,17,10', 15', 16', 17') ermittelt.

11. Verwendung einer zumindest eine Kartenfunktion (12,13,14) aufweisenden Karte (7) mit zumindest einem nicht-flüchtigen Datenspeicher (11), für die softwaremässige Konfiguration eines Karten-terminals (1)nach Anspruch 10.

## Claims

1. A method for operating a card terminal (1) for a card (7), which has at least one card function (12, 13, 14), comprising a non-volatile data storage (11), wherein the card terminal (1) first determines the card function (12, 13, 14) by means of at least one identification (I) stored on the card (7), and the card terminal (1) is then configured with regard to the software as a function of the card function (12, 13, 14), **characterized in that** a communication connection is established to at least one network element (10, 15, 16, 17, 10', 15', 16', 17'), which can be assigned to the card function (12, 13, 14), of a network (9, 9'), which has a plurality of network elements (10, 15, 16, 17, 10', 15', 16', 17'), via a network interface (8) of the card terminal (1) for configuration purposes, wherein the card terminal (1) determines the network address (ADR1, ADR2, ADR3, ADR4, ADR', ADR") of the network element (10, 15, 16, 17, 10', 15', 16', 17') from the identification (I).

2. The method according to claim 1, **characterized in that** the network element (10, 15, 16, 17, 10', 15', 16', 17') transmits configuration means (K) to the card terminal (1) as a function of the determined card function (12, 13, 14).

3. The method according to any one of the preceding claims, **characterized in that**, from the identification (I), the card terminal (1) determines request parameters, which are transmitted to the network element (10, 15, 16, 17, 10', 15', 16', 17'), so as to obtain at least the one configuration means (K), which can be assigned to the card function (12, 13, 14) and which is then processed in the card terminal (1), from the network element.

4. The method according to any one of the preceding claims, **characterized in that** the card terminal (1) establishes a communication connection to a plurality of network elements (10, 15, 16, 17, 10', 15', 16', 17'), preferably consecutively, as a function of the card function (12, 13, 14) and/or of the configuration means (K).

5. The method according to any one of the preceding claims, **characterized in that** each of the network elements (10, 15, 16, 17, 10', 15', 16', 17') transmits configuration means (K) to the card terminal (1).

6. The method according to any one of the preceding claims, **characterized in that** one of the configuration means (K) is a configuration program (KI), by means of which the card terminal (1) can communicate with the card (7).

7. The method according to any one of the preceding claims, **characterized in that** at least another one of the configuration means (K) is an execution program (K2), by means of which the card function (12, 13, 14) can be executed.

8. The method according to any one of the preceding claims, **characterized in that** at least a further one of the configuration means (K) is a network address (ADR1, ADR2, ADR3, ADR4, ADR', ADR") of a network element (10, 15, 16, 17, 10', 15', 16', 17').

9. The method according to any one of the preceding claims, **characterized in that** at least one execution program (K2) is stored on the card (7).

10. A card terminal (1) for a card (7), which has at least one card function (12, 13, 14), comprising a non-volatile data storage (11), comprising a card reader (6) and comprising a data-processing device (2), wherein the card terminal (1) has a device (5) for determining the card function (12, 13, 14) by means of at least one identification (I) stored on the card, and wherein the data-processing device (2) is embodied so as to be capable of being configured with regard to the software as a function of the card function (12, 13, 14), **characterized by** a network interface (8), via which, for configuration purposes, the card terminal (1) establishes a communication connection to at least one network element (10, 15, 16, 17, 10', 15', 16', 17'), which can be assigned to the card function, of a network (9, 9') having a plurality of network elements (10, 15, 16, 17, 10', 15', 16', 17'), wherein the card terminal (1) determines the network address (ADR1, ADR2, ADR2, ADR4, ADR', ADR") of the network element (10, 15, 16, 17, 10', 15', 16', 17') from the identification (I).

11. A use of a card (7), which has at least one card function (12, 13, 14), comprising at least one non-volatile data storage (11) for the software-related configuration of a card terminal (1) according to claim 10.

## Revendications

1. Procédé pour exploiter un terminal pour carte (1) pour une carte (7) présentant au moins une fonction de carte (12, 13, 14) et comportant une mémoire de données (11) non volatile, ledit terminal pour carte (1) déterminant d'abord la fonction de carte (12, 13, 14) par l'intermédiaire d'au moins une identification (I) enregistrée sur la carte (7) pour que, suite à cela et en fonction de la fonction de carte (12, 13, 14), le terminal pour carte (1) soit configuré de manière logicielle, **caractérisé en ce, que** pour la configuration soit établie par l'intermédiaire d'une interface de réseau (8) du terminal pour carte (1) une liaison de communication vers au moins un élément de réseau (10, 15, 16, 17, 10', 15', 16', 17') affectable à la fonction de carte (12, 13, 14) et appartenant à un réseau (9, 9') comportant plusieurs éléments de réseau (10, 15, 16, 17, 10', 15', 16', 17'), et dont le terminal pour carte (1) identifie l'adresse réseau (ADR1, ADR2, ADR3, ADR4, ADR', ADR") de l'élément de réseau (10, 15, 16, 17, 10', 15', 16', 17') à partir de l'identification (I).

2. Procédé selon la revendication 1, **caractérisé en ce, que** l'élément de réseau (10, 15, 16, 17, 10', 15', 16', 17') transmette au terminal pour carte (1) des moyens de configuration (K) en fonction de la fonction identifiée de carte (12, 13, 14).

3. Procédé selon l'une des revendications précédentes, **caractérisé en ce, que** le terminal pour carte (1) détermine à partir de l'identification (I) des paramètres de requête, qui sont transférés à l'élément de réseau (10, 15, 16, 17, 10', 15', 16', 17'), pour obtenir de l'élément de réseau au moins le moyen de configuration (K) affectable à la fonction de carte (12, 13, 14), ledit moyen de configuration (K) étant ensuite traité dans le terminal pour carte (1).

4. Procédé selon l'une des revendications précédentes, **caractérisé en ce, que** le terminal pour carte (1) établisse une liaison de communication, en fonction de la fonction de carte (12, 13, 14) et/ou du moyen de configuration (K), avec plusieurs éléments de réseau (10, 15, 16, 17, 10', 15', 16', 17'), de préférence successivement.

5. Procédé selon l'une des revendications précédentes, **caractérisé en ce, que** chacun des éléments de réseau (10, 15, 16, 17, 10', 15', 16', 17') transmette des moyens de configuration (K) au terminal pour carte (1).

6. Procédé selon l'une des revendications précédentes, **caractérisé en ce, qu'**un des moyens de configuration (K) soit un programme de configuration (KI), avec lequel le terminal pour carte (1) peut communiquer avec la carte (7).

7. Procédé selon l'une des revendications précédentes, **caractérisé en ce, qu'**au moins un autre des moyens de configuration (K) soit un programme d'exécution (K2) qui permet d'exécuter la fonction de carte (12, 13, 14).

8. Procédé selon l'une des revendications précédentes, **caractérisé en ce, qu'**au moins un autre des moyens de configuration (K) soit une adresse réseau (ADR1, ADR2, ADR3, ADR4, ADR', ADR") d'un élément de réseau (10, 15, 16, 17, 10', 15', 16', 17').

9. Procédé selon l'une des revendications précédentes, **caractérisé en ce, qu'**au moins un programme d'exécution (K2) soit enregistré sur la carte (7).

10. Terminal pour carte (1) pour une carte (7) présentant au moins une fonction de carte (12, 13, 14) et comportant une mémoire de données (11) non volatile, avec un lecteur de cartes (6) et avec un dispositif de traitement de données (2), ledit terminal pour carte (1) comportant un dispositif (5) pour l'identification de la fonction de carte (12, 13, 14) à l'aide d'au moins une identification (I) enregistrée sur la carte et ledit dispositif de traitement de données (2) étant conçu pour être configurable de manière logicielle en fonction de la fonction de carte (12, 13, 14), **caractérisé par** une interface réseau (8), par l'intermédiaire de laquelle le terminal pour carte (1) établit pour la configuration une liaison de communication vers au moins un élément de réseau (10, 15, 16, 17, 10', 15', 16', 17') affectable à la fonction de carte et appartenant à un réseau (9, 9') comportant plusieurs éléments de réseau (10, 15, 16, 17, 10', 15', 16', 17'), et dont le terminal pour carte (1) identifie l'adresse réseau (ADR1, ADR2, ADR2, ADR4, ADR', ADR") de l'élément de réseau (10, 15, 16, 17, 10', 15', 16', 17') à partir de l'identification (I).

11. Utilisation d'une carte (7) comportant au moins une fonction de carte (12, 13, 14) avec au moins une mémoire de données (11) non volatile, pour la configuration logicielle d'un terminal pour carte (1) selon la revendication 10.
